# EUROPEAN PATENT APPLICATION

(11) **EP 4 525 228 A1**
(43) Date of publication of application: **19.03.2025**
(21) Application number: 24306474.8
(22) Date of filing: 10.09.2024
(51) Int. Cl.: H02B 1/20, H02G 5/00

(54) **COPPER BAR**

(30) Priority: 13.09.2023 CN 202322493827 U
(71) Applicant: SCHNEIDER ELECTRIC INDUSTRIES SAS, 92500 Rueil-Malmaison (FR)
(72) Inventor: ZHANG, Qinghong, Shanghai, 201203 (CN); WANG, Weijie, Shanghai, 201203 (CN)
(74) Representative: Manitz Finsterwald Patent- und Rechtsanwaltspartnerschaft mbB

(57) **Abstract**

Embodiments of the present disclosure provide a copper bar extending in a length direction and having a predetermined cross section in a direction perpendicular to the length direction, the predetermined cross section having a width direction and a thickness direction and including: a base part including a first side and a second side opposite to each other in the thickness direction; and a feature part including a first extension part and a second extension part, the first extension being disposed on a side of the base part in the width direction adjacent to the first side and extending in a direction away from the base part, the second extension part being disposed on the other side of the base part in the width direction adjacent to the first side and extending in a direction away from the base part, and both a thickness of the first extension part and a thickness of the second extension in the thickness direction are smaller than a thickness of the base part in the thickness direction.

## Description

### FIELD

**Embodiments** of the present disclosure relate to a field of electrical equipment, and more particularly, to a copper bar.

### BACKGROUND

**A** copper bar typically employed in a traditional low-voltage drawer cabinet is a rectangular copper bar. The rectangular copper bar has various problems in actual use, for example, a thickness of the copper bar is generally limited, and in order to improve a current carrying capacity of the copper bar, a width of the copper bar can only be increased, which makes an occupied space of the copper bar too large and leaves an actual available space of the drawer very limited, and also greatly reduces an available space of a secondary component. In addition, the traditional rectangular copper bar needs punching connection, so production efficiency is low. In addition, too thick copper bars have obvious skin effect and low current carrying efficiency. It is therefore desirable to optimize the design.

### SUMMARY

An object of the present disclosure is to provide a copper bar to at least partially solve the above problems.

**In** a first aspect of the present disclosure, there is provided a copper bar extending in a length direction and having a predetermined cross section in a direction perpendicular to the length direction, the predetermined cross section having a width direction and a thickness direction and including: a base part including a first side and a second side opposite to each other in the thickness direction; and a feature part including a first extension part and a second extension, the first extension part being disposed on a side of the base part in the width direction adjacent to the first side and extending in a direction away from the base part, the second extension being disposed on the other side of the base part in the width direction adjacent to the first side and extending in a direction away from the base part, and both a thickness of the first extension part and a thickness of the second extension in the thickness direction are smaller than a thickness of the base part in the thickness direction.

According to the copper bar provided by the embodiments of the present disclosure, by arranging the feature part on the base part, the copper bar can have a relatively small sectional area and also has relatively high current carrying capacity.

**In** some embodiments, the feature part includes a groove part, the groove part is disposed on the first side of the base part, the groove part includes a first opening part and a second opening part in communication with the first opening part, and a width of the first opening part in the width direction is less than a width of the second opening part in the width direction. In such an embodiment, by disposing the groove part on the base part, a non-punching connection between a fastener and the copper bar can be achieved.

In some embodiments, the second opening includes a pair of arc parts, wherein one of the pair of arc parts is disposed at an end of the second opening adjacent to the first extension part and bent towards a geometric center of the base part, and the other one of the pair of arc parts is disposed at an end of the second opening part adjacent to the second extension part and bent towards the geometric center of the base part. In such an embodiment, by disposing the pair of arc parts, across-sectional area of the copper bar can be made as large as possible, and an industrial production is facilitated.

**In** some embodiments, the second opening part further includes a pair of step parts, wherein one of the pair of step parts is disposed at an end of one of the pair of arc parts adjacent to the first side and is recessed in a direction close to the first side, and the other one of the pair of step parts is disposed at an end of the other one of the pair of arc parts adjacent to the first side and is recessed in a direction close to the first side. In such an embodiment, by disposing the pair of step parts, the fastener can be reliably stressed in an event that the copper bar is connected with the fastener.

**In** some embodiments, the feature part further includes a third extension part and a fourth extension part, the third extension part is disposed on a side of the base part in the width direction adjacent to the second side and extends in a direction away from the base part, and the fourth extension part is disposed on the other side of the base part in the width direction adjacent to the second side and extends in a direction away from the base part. In such an embodiment, by disposing the third extension part and the fourth extension part, the cross-sectional area of the copper bar can be increased to improve a current carrying capacity of the copper bar.

In some embodiments, the feature further includes a first transition part and a second transition part, wherein the first transition part is disposed between the first extension part and the third extension part and is recessed in a direction close to a geometric center of the base part, and the second transition part is disposed between the second extension part and the fourth extension part and is recessed in a direction close to the geometric center of the base part. In such an embodiment, by disposing the first transition part and the second transition part, the copper bar can be easier to process during industrial production, and a batch production efficiency of the copper bar is improved.

**In** some embodiments, the feature part further includes a third extension part and a fourth extension part, wherein the third extension part is disposed on a side of the base part in the width direction adjacent to the second side and extends in a direction away from the base part, and the fourth extension part is disposed on the other side of the base part in the width direction adjacent to the second side and extends in the direction away from the base part. In such an embodiment, shape of the third extension and the fourth extension can maximize the current-carrying capacity of the copper bar with a fixed cross-sectional area of the copper bar.

In some embodiments, the feature part further includes a first transition part and a second transition part, wherein the first transition part is disposed between the first extension part and the third extension part and is recessed in a direction close to a geometric center of the base part, and the second transition part is disposed between the second extension part and the fourth extension part and is recessed in a direction close to a geometric center of the base part. In such an embodiment, by disposing the first transition part and the second transition part, the copper bar also has a larger surface area while the cross-sectional area is maximized, thereby improving a heat dissipation performance of the copper bar.

**It** should be understood that the content described in this content section is not intended to limit key features or important features of the embodiments of the present disclosure, nor is it intended to limit a scope of the present disclosure. Other features of the present disclosure will become readily understood from following description.

### BRIEF DESCRIPTION OF DRAWINGS

The above and other features, advantages, and aspects of various embodiments of the present disclosure will become more apparent from following detailed description taken in conjunction with drawings. In the drawings, the same or similar reference numbers refer to the same or similar elements, wherein:
**FIG.** 1 shows a schematic structural diagram of a copper bar according to an embodiment of the present disclosure;
**FIG.** 2 shows a schematic cross-sectional view of the copper bar shown in FIG. 1;
FIG. 3 shows a schematic structural diagram of a copper bar according to another embodiment of the present disclosure;
**FIG.** 4 shows a schematic cross-sectional view of the copper bar shown in FIG. 3;
FIG. 5 shows a schematic structural diagram of a copper bar according to another embodiment of the present disclosure; and
**FIG.** 6 shows a schematic cross-sectional view of the copper bar shown in FIG. 5.

### DETAILED DESCRIPTION

Preferred embodiments of the present disclosure will be described in more detail below with reference to drawings. While the preferred embodiments of the present disclosure are shown in the drawings, it should be understood that the present disclosure may be implemented in various forms and should not be limited by the embodiments set forth herein. Rather, these embodiments are provided to make the present disclosure more thorough and complete, and to fully convey the scope of the present disclosure to those of ordinary skill in the art.

As used herein, the term "include" and variations thereof represent openness, i.e., "include but not limited to". Unless specifically stated, the term "or" means "and / or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

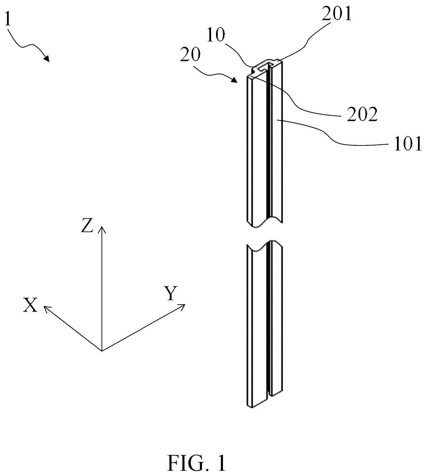

As described above, the traditional rectangular copper bar has the problems that an occupied space of a copper bar is too large, an actual available space of the drawer is very limited, a secondary component is difficult to be arranged when connecting the copper bar, and the production efficiency of the copper bar is low, and thus the design needs to be optimized. Embodiments of the present disclosure provide a copper bar. In this solution, a base part of the copper bar is provided with a feature part for implementing various functions, for example, a first extension part and a second extension part for increasing a cross-sectional area of the copper bar to improve current carrying capacity of the copper bar, a groove part including a groove part for insertion of a fastener to realize a non-punching connection between the copper bar and a fastener, a third extension part and a fourth extension part for increasing the cross-sectional area of the copper bar to further improve current carrying capacity of the copper bar, and a first transition part and a second transition part capable of making the copper bar easy for industrial production. In this way, the copper bar can have strong current carrying capacity and facilitate production and processing in a case of having a small cross-sectional area. Hereinafter, principles of the present disclosure will be described with reference to FIGS. 1 to 6.

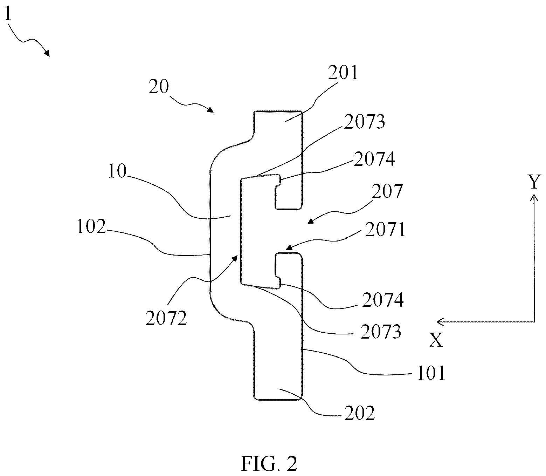

FIG. 1 shows a schematic structural diagram of a copper bar 1 according to an embodiment of the present disclosure. FIG. 2 shows a schematic cross-sectional view of the copper bar 1 shown in FIG. 1. As shown in FIGS. 1 and 2, the copper bar 1 described herein extends in a length direction Z and has a predetermined cross section in a direction perpendicular to the length direction Z. The predetermined cross-section has a width direction Y and a thickness direction X and generally includes a base part 10 and a feature part 20. The base part 10 includes a first side 101 and a second side 102 opposite to each other in the thickness direction X. The feature 20 includes a first extension part 201 and a second extension part 202. The first extension part 201 is disposed on a side of the base part 10 in the width direction Y adjacent to the first side 101 and extends in a direction away from the base part 10, and the second extension part 202 is disposed on the other side of the base part 10 in the width direction Y adjacent to the first side 101 and extends in a direction away from the base part 10, and both a thickness of the first extension part 201 and a thickness of the second extension part 202 in the thickness direction X are smaller than a thickness of the base part 10 in the thickness direction X.

In an embodiment, the thickness of the first extension part 201 and the thickness of the second extension part 202 in the thickness direction X is substantially the same as the thickness of the traditional rectangular copper bar, so that the copper bar 1 in the embodiment can be applied to an existing low-voltage drawer cabinet. It should be understood that, based on the teaching provided by the present disclosure, those of ordinary skill in the art may envisage other types of the first extension part 201 and the second extension part 202 to implement the foregoing functions, and these implementations all fall within the scope of the present disclosure.

**In** an embodiment, as shown in FIGS. 1 and 2, the feature part 20 includes a groove part 207. The groove part 207 is disposed on the first side 101 of the base part 10 and includes a first opening part 2071 and a second opening part 2072 in communication with the first opening part 2071. A width of the first opening part 2071 in the width direction Y is less than a width of the second opening part 2072 in the width direction Y. A space enclosed by the first opening part 2071 and the second opening part 2072 may allow a fastener to be inserted in the length direction Z, wherein screw rod of the fastener may be inserted into the first opening part 2071, and a head part of the fastener may be inserted into the second opening part 2072 to realize non-punching connection between the fastener and the copper bar, thereby providing a large amount of installation space for a secondary component. In addition, the non-punching connection design can omit a punching step of the copper bar 1 in industrial production, and greatly improves production efficiency.

In an embodiment, the fastener connected to the copper bar 1 is a bolt. In other embodiments, any type of traditional fastener, such as a screw, may be employed, all of which fall within the scope of the present disclosure.

It should be understood that, based on the teaching provided by the present disclosure, those of ordinary skill in the art may envisage other types of the first opening part 2071 and the second opening part 2072 cooperate with any fastener to achieve the foregoing functions, and these implementations all fall within the scope of the present disclosure.

In an embodiment, as shown in FIGS. 1 and 2, the second opening 2072 includes a pair of arc parts 2073. One of the pair of arc parts 2073 is disposed at an end of the second opening part 2072 adjacent to the first extension part 201 and bent towards a geometric center of the base part 10, and the other one of the pair of arc parts 2073 is disposed at an end of the second opening part 2072 adjacent to the second extension part 202 and bent towards a geometric center of the base part 10. The pair of arc parts 2073 can facilitate reliable insertion of the fastener into the second opening part 2072 while further increasing a surface area of the copper bar 1 so that the copper bar 1 has better heat dissipation performance. It should be understood that, based on the teaching provided by the present disclosure, those of ordinary skill in the art may envisage other types of structures to implement the foregoing functions, and these implementations all fall within the scope of the present disclosure.

In an embodiment, as shown in FIGS. 1 and 2, the second opening part 2072 further includes a pair of step parts 2074. One of the pair of step parts 2074 is disposed at an end of one of the pair of arc parts 2073 adjacent to the first side 101 and is recessed in a direction close to the first side 101, and the other one of the pair of step parts 2074 is disposed at an end of the other one of the pair of arc parts 2073 adjacent to the first side 101 and is recessed in a direction close to the first side 101. In this way, the step portion 2074 can make the fastener more fully stressed when the fastener is connected to the copper bar 1, thereby improving stability of the copper bar 1 during installation and connection. It should be understood that, based on the teaching provided by the present disclosure, those of ordinary skill in the art may envisage other types of structures to implement the foregoing functions, and these implementations all fall within the scope of the present disclosure.

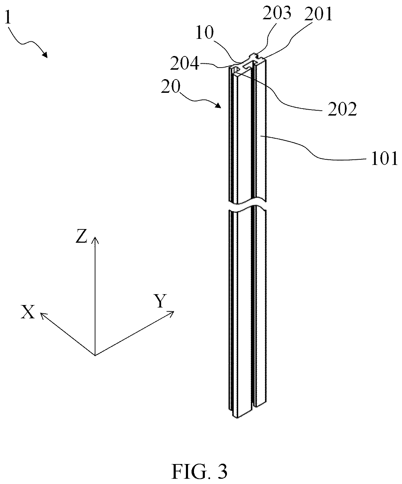

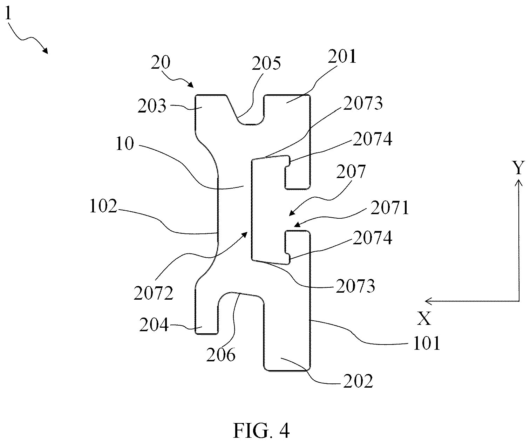

**FIG.** 3 shows a schematic structural diagram of a copper bar 1 according to another embodiment of the present disclosure. FIG. 4 shows a schematic cross-sectional view of the copper bar 1 shown in FIG. 3. In an embodiment, as shown in FIGS. 3 and 4, the feature part 20 further includes a third extension part 203 and a fourth extension part 204. The third extension part 203 is disposed on a side of the base part 10 in the width direction Y adjacent to the second side 102 and extends in a direction away from the base part 10. The fourth extension part 204 is disposed on the other side of the base part 10 in the width direction Y adjacent to the second side 102 and extends in a direction away from the base part 10. The third extension part 203 and the fourth extension part 204 can further increase the cross-sectional area of the copper bar 1, thereby improving the current carrying capacity of the copper bar 1. It should be understood that, based on the teaching provided by the present disclosure, those of ordinary skill in the art may envisage other types of third extension part 203 and fourth extension part 204 to implement the foregoing functions, and these implementations all fall within the scope of the present disclosure.

In an embodiment, as shown in FIGS. 3 and 4, the feature part 20 further includes a first transition part 205 and a second transition part 206. The first transition part 205 is disposed between the first extension part 201 and the third extension part 203 and is recessed in a direction close to a geometric center of the base part 10. The second transition part 206 is disposed between the second extension part 202 and the fourth extension part 204 and is recessed in a direction close to the geometric center of the base part 10. The first transition part 205 and the second transition part 206 can maximize the cross-sectional area of the copper bar 1 while also having a larger surface area, thereby improving the heat dissipation performance of the copper bar 1. It should be understood that, based on the teaching provided by the present disclosure, those of ordinary skill in the art may envisage other types of first transition parts 205 and second transition parts 206 to implement the foregoing functions, and these implementations all fall within the scope of the present disclosure.

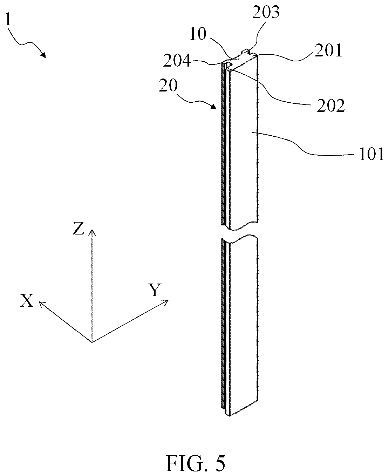

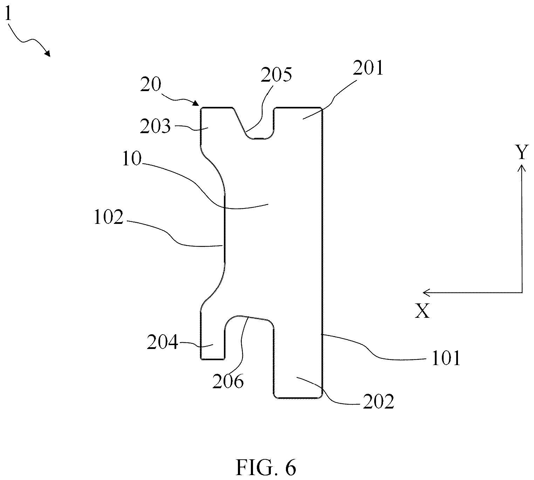

FIG. 5 shows a schematic structural diagram of a copper bar 1 according to another embodiment of the present disclosure. FIG. 6 shows a schematic cross-sectional view of the copper bar 1 shown in FIG. 5. In an embodiment, as shown in FIGS. 5 and 6, the copper bar 1 includes a base part 10, a first extension part 201, a second extension part 202, a third extension part 203, a fourth extension part 204, a first transition part 205, and a second transition part 205. The cross-sectional area of the predetermined cross section of the copper bar 1 is further increased, so that the current carrying capacity of the copper bar 1 is further improved, thereby adapting to different actual working scenarios. In addition, the above features enable the copper bar 1 to overcome a disadvantage that the traditional rectangular copper bar can only increase the width of the copper bar in order to improve the current carrying capacity, and save a large amount of available space for the low-voltage drawer cabinet where the copper bar 1 is located.

In an embodiment, as shown in FIG. 1 to FIG. 6, each connecting part between the base part 10 and the feature part 20 of the copper bar 1 is transitionally connected in a rounded corner manner, so that the copper bar 1 is easy to process in an industrial production process, and a batch production efficiency of the copper bar 1 is improved.

In addition, the copper bar according to the embodiments of the present disclosure can prevent excessively thick thickness, avoid skin effect and improve the current carrying efficiency.

Various embodiments of the present disclosure have been described above, which are exemplary, not exhaustive, and are not limited to the embodiments disclosed. Many modifications and variations will be apparent to those of ordinary skill in the art without departing from the scope and spirit of the illustrated embodiments. The selection of the terms used herein is intended to best explain the principles of the embodiments, practical applications, or technical improvements in the marketplace, or to enable others of ordinary skill in the art to understand the embodiments disclosed herein.

## Claims

1. A copper bar (1), **characterized by** extending in a length direction (Z) and having a predetermined cross section in a direction perpendicular to the length direction (Z), the predetermined cross section having a width direction (Y) and a thickness direction (X) and comprising:
a base part (10) comprising a first side (101) and a second side (102) opposite to each other in the thickness direction (X); and
a feature part (20) comprising a first extension part (201) and a second extension part (202), the first extension part (201) being disposed on a side of the base part (10) in the width direction (Y) adjacent to the first side (101) and extending in a direction away from the base part (10), the second extension part (202) being disposed on the other side of the base part (10) in the width direction (Y) adjacent to the first side (101) and extending in a direction away from the base part (10), and both a thickness of the first extension part (201) and a thickness of the second extension part (202) in the thickness direction (X) are smaller than a thickness of the base part (10) in the thickness direction (X).

2. The copper bar (1) of claim 1, **characterized in that** the feature part (20) comprises a groove part (207), wherein the groove part (207) is disposed on the first side (101) of the base part (10), and the groove part (207) comprises a first opening part (2071) and a second opening part (2072) in communication with the first opening part (2071), and a width of the first opening part (2071) in the width direction (Y) is less than a width of the second opening part (2072) in the width direction (Y).

3. The copper bar (1) of claim 2, **characterized in that** the second opening part (2072) comprises a pair of arc parts (2073), wherein one of the pair of arc parts (2073) is disposed at an end of the second opening part (2072) adjacent to the first extension part (201) and bent towards a geometric center of the base part (10), and the other one of the pair of arc parts (2073) is disposed at an end of the second opening part (2072) adjacent to the second extension part (202) and bent towards a geometric center of the base part (10).

4. The copper bar (1) of claim 3, **characterized in that** the second opening part (2072) further comprises a pair of step parts (2074), wherein one of the pair of step parts (2074) is disposed at an end of one of the pair of arc parts (2073) adjacent to the first side (101) and is recessed in a direction close to the first side (101), and the other one of the pair of step parts (2074) is disposed at an end of the other one of the pair of arc parts (2073) adjacent to the first side (101) and is recessed in the direction close to the first side (101).

5. The copper bar (1) of claim 2, **characterized in that** the feature part (20) further comprises a third extension part (203) and a fourth extension part (204), wherein the third extension part (203) is disposed on a side of the base part (10) in the width direction (Y) adjacent to the second side (102) and extends in the direction away from the base part (10), and the fourth extension (204) is disposed on the other side of the base part (10) in the width direction (Y) adjacent to the second side (102) and extends in the direction away from the base part (10).

6. The copper bar (1) of claim 5, **characterized in that** the feature part (20) further comprises a first transition part (205) and a second transition part (206), wherein the first transition part (205) is disposed between the first extension part (201) and the third extension part (203) and is recessed in a direction close to a geometric center of the base part (10), and the second transition part (206) is disposed between the second extension part (202) and the fourth extension part (204) and is recessed in the direction close to the geometric center of the base part (10).

7. The copper bar (1) of claim 1, **characterized in that** the feature part (20) further comprises a third extension part (203) and a fourth extension part (204), wherein the third extension part (203) is disposed on a side of the base part (10) in the width direction (Y) adjacent to the second side (102) and extends in the direction away from the base part (10), and the fourth extension part (204) is disposed on the other side of the base part (10) in the width direction (Y) adjacent to the second side (102) and extends in the direction away from the base part (10).

8. The copper bar (1) of claim 7, **characterized in that** the feature part (20) further comprises a first transition part (205) and a second transition part (206), wherein the first transition part (205) is disposed between the first extension part (201) and the third extension part (203) and is recessed in a direction close to a geometric center of the base part (10), and the second transition part (206) is disposed between the second extension part (202) and the fourth extension part (204) and is recessed in the direction close to the geometric center of the base part (10).
